# EUROPÄISCHE PATENTANMELDUNG

(11) **EP 1 621 361 A2**
(43) Veröffentlichungstag der Anmeldung: **01.02.2006**
(21) Anmeldenummer: 05106074.7
(22) Anmeldetag: 05.07.2005
(51) Int. Cl.: B42C 19/08, B65G 1/12

(54) **Transportvorrichtung für Buchblöcke**

(30) Priorität: 28.07.2004 IT MI20041527; 28.07.2004 IT MI20041529
(71) Anmelder: Heidelberger Druckmaschinen AG, 69115 Heidelberg (DE)
(72) Erfinder: Lorenzi, Mario, 35010 Vallafranca-Padova (IT); Ajami, Mohamad, 35142 Padova (IT)

(57) **Zusammenfassung**

Die Erfindung betrifft eine Transportvorrichtung (100, 100') für Buchblöcke (1) entlang eines Transportpfads (T) mit im Wesentlichen vertikalen Fächern (10) zur Aufnahme der Buchblöcke (1), wobei die Fächer (10) an einer umlaufenden Kette (20) angeordnet sind, wobei Kühlmittel (50) entlang des Transportpfades (T) vorgesehen sind. Außerdem betrifft die Erfindung eine Kühlvorrichtung (500, 500') mit einer solchen Transportvorrichtung (100, 100').

## Beschreibung

Die Erfindung betrifft eine Transportvorrichtung für Buchblöcke entlang eines Transportpfades gemäß dem Oberbegriff des Anspruchs 1.

Derartige Transportvorrichtungen werden z. B. in der Buchproduktion verwendet, um Buchblöcke zwischen verschiedenen Bearbeitungsstationen zu bewegen. In einem Teil der Buchproduktion ist es erforderlich, einen Stapel blattförmiger Bedruckstoffe derart zu transportieren, dass die einzelnen Seiten des Buchblocks nicht zueinander verrutschen. Dazu werden in der Regel unterschiedliche Zangensysteme verwendet, die den Buchblock festhalten. Sobald der Buchblock gebunden ist, ist die Verwendung von Zangen nicht erforderlich und entsprechend werden Transportbänder oder Transportfächer zum Weitertransport der Buchblöcke verwendet.

Eine andere Einrichtung für den Transport von flachen Produkten ist beispielsweise aus der europäischen Patentschrift EP 0 769 332 bekannt. Diese Transporteinrichtung weist im Wesentlichen vertikale Fächer entlang eines Transportpfades zur Aufnahme von flachen Produkten auf, wobei die Fächer an einer umlaufenden Kette angeordnet sind. Zwar handelt es sich hierbei bei den flachen Produkten nicht notwendigerweise um Buchblöcke, sondern um Versandtaschen, aber auch diese Versandtaschen werden lose in den Fächern gesammelt, also nicht durch Zangen oder Greifer gehalten.

In Klebebindevorrichtungen wird auf einer Schmalseite von einem Stapel von blattförmigen Bedruckstoffen eine Leimschicht aufgetragen. Diese bildet, nachdem ein Umschlag umgelegt wurde, den Buchrücken des Buchblocks. Im Anschluss wird ein solcher klebegebundener Buchblock an drei Seiten beschnitten, um dem Buchblock ein attraktives äußeres Erscheinungsbild zu geben. Um eine ausreichende Schnittqualität zu erreichen, ist es erforderlich, dass der Klebstoff beim Dreischneiden bereits so fest ist, dass sich die Seiten bei den hohen Schnittkräften nicht zueinander verschieben oder die Klebebindung auf andere Art und Weise beschädigt wird. Im Stand der Technik wird daher der frisch klebegebundene Buchblock so transportiert, dass er bei Erreichen des Dreischneiders mindestens auf eine vorgegebene Temperatur abgekühlt ist. Dies wird beispielsweise durch lange Förderstrecken, die aber platzaufwendig sind, erreicht.

Die europäische Patentanmeldung EP 1 350 635 betrifft einen Kühlturm für eine Klebebindevorrichtung. Hier werden Bücher oder Buchblöcke in leicht zur Horizontalen geneigte Fächer eingegeben und an Kühlmitteln in einer vertikalen Bewegung vorbeigeführt. Um die Bücher aus den Fächern, die vertikal bewegt werden, wieder in eine liegende Vorwärtsbewegung überführen zu können, ist neben der vertikalen Förderstrecke eine Entladevorrichtung vorgesehen, die die Buchblöcke aus den vertikal beweglichen Fächern herausschiebt und dann in einer liegenden Position weiterbewegt. Nachteilig daran ist, dass diese Entladevorrichtung relativ aufwendig gestaltet ist, und die Entladevorrichtung neben dem vertikalen Transportpfad der Fächer angeordnet ist, so dass die Vorrichtung in Transportrichtung relativ breit baut. Dadurch ist der Vorteil, den der Raumgewinn durch das vertikale Anordnen der Fächer übereinander bringt, verringert. Dieser Nachteil entsteht im Wesentlichen dadurch, dass die Transportrichtung der Buchblöcke von einer horizontalen in eine vertikale und im Anschluss von einer vertikalen in eine horizontale Richtung wechselt, dabei aber die Ausrichtung der Buchblöcke während dieses Transportvorgangs über die ganze Zeit im Wesentlichen liegend erfolgt.

Es wäre daher wünschenswert, eine Transportvorrichtung für Buchblöcke bereitzustellen, die eine kontinuierliche Transportrichtung bei geringem Platzbedarf aufweist um bei der gleichzeitig eine Kühlung der Buchrücken möglich ist, wie dies beispielsweise bei Klebebindevorrichtungen vonnöten ist.

Es ist daher Aufgabe der Erfindung, eine Transportvorrichtung für Buchblöcke entlang eines Transportpfades anzugeben, mit der eine kontinuierliche Transportbewegung bei geringem Platzbedarf möglich ist, und zudem eine Kühlung der Buchblöcke und insbesondere der Buchrücken möglich ist.

Diese Aufgabe wird mit Hilfe der erfindungsgemäßen Transportvorrichtung mit den in Anspruch 1 genannten Merkmalen gelöst. Weitere Merkmale ergeben sich aus den Unteransprüchen.

Dies wird vorteilhafterweise dadurch erreicht, dass die Fächer, in denen die Buchblöcke transportiert werden, in eine vertikale Position aufgerichtet werden, wobei sich dadurch der Abstand von einem Buchblock zum übernächsten Buchblock in Transportrichtung deutlich verkürzt, so also der Platzbedarf erheblich verringert ist, als wenn die Buchblöcke hintereinander transportiert werden würden. Dadurch, dass die Buchblockdichte im Vergleich zu einem Förderband, das die Buchblöcke z. B. einzeln zu der Transportvorrichtung bringt, erhöht ist, können die vertikalen Fächer entlang des Transportpfades langsamer bewegt werden, als auf dem entsprechenden Förderband, das die Buchblöcke parallel liegend zur Transportvorrichtung transportiert. Dadurch haben die Buchblöcke in den vertikalen Fächern mehr Zeit, um eine entsprechend gleich lange Strecke zurückzulegen, und damit auch mehr Zeit, um auf die erforderliche Temperatur abzukühlen. Das Abkühlen wird durch Kühlmittel unterstützt, die entlang des Transportpfades vorgesehen sind. Außerdem wird durch die Verwendung von den vertikalen Fächern kein Wechsel der Transportrichtung selbst, also etwa von horizontal nach vertikal, erforderlich, sondern lediglich die Ausrichtung der Buchblöcke entlang fer Transportrichtung verändert. So wird die gesamte Transportvorrichtung entsprechend einfacher und damit kostengünstiger herstellbar.

In einer vorteilhaften Ausgestaltung der Transportvorrichtung sind die Fächer in Transportrichtung leicht nach hinten geneigt. Besonders vorteilhaft weisen die Fächer eine Seitenwand und einen Fächerboden auf, wobei ein Buchblock im Fach mit dem Buchrücken auf dem Fächerboden aufliegt und mit einer Flachseite an der Seitenwand anliegt. Dadurch kann sichergestellt werden, dass der Buchblock nicht während seines Transports entlang der Transportrichtung umkippt und auseinanderklafft, da er bereits gegen die Transportrichtung geneigt ist. Außerdem verteilt sich das Gewicht des Buchblocks zum Teil auf die Seitenwand und zum Teil auf den Fächerboden, so dass der frisch verleimte Buchrücken weniger beansprucht wird, als wenn das Fach ganz vertikal ausgerichtet wäre.

In besonders vorteilhafter Weiterbildung dieser Ausführungsform der erfindungsgemäßen Transportvorrichtung weist der Fachboden Öffnungen und/oder eine kammartige Struktur auf. Durch diese Öffnungen bzw. durch diese kammartige Struktur des Fachbodens liegt der Buchrücken nicht über seine ganze Fläche auf dem Fachboden auf und ist daher besser der Kühlung zugänglich.

In einer weiteren vorteilhaften Ausgestaltung der erfindungsgemäßen Transportvorrichtung handelt es sich bei den Kühlmitteln um Ventilatoren. Besonders vorteilhafterweise sind die Ventilatoren derart eingebaut, dass sie einen Luftstrom erzeugen, der gegen den Buchrücken gerichtet ist. Aufgrund der Ausrichtung der Fächer bedeutet dies, dass die Ventilatoren einen im Wesentlichen vertikalen Luftstrom erzeugen, der von unten gegen die Fachböden und damit die Buchrücken gerichtet ist. Die Ventilatoren sind dabei vorteilhafterweise innerhalb des von der Kette umschlossenen Raumes angeordnet. Dadurch haben sie eine möglichst geringe Entfernung zu dem Buchrücken, was sich positiv auf den Kühleffekt des Luftstroms auswirkt.

Die Erfindung betrifft auch eine Kühlvorrichtung für Buchblöcke mit wenigstens einer Transportvorrichtung nach Anspruch 1, wobei die Kühlvorrichtung eine zusätzliche Anlegeeinheit, mit der die Buchblöcke in die Fächer einführbar sind, sowie eine zusätzliche Auslageeinheit aufweist, mit der die Buchblöcke aus den Fächern ausführbar sind. Vorteilhafterweise ist der Antrieb der gesamten Kühlvorrichtung in der Auslageeinheit angeordnet.

In einer vorteilhaften Ausgestaltung der erfindungsgemäßen Kühlvorrichtung ist die Anlageeinheit derart ausgestaltet, dass die Buchblöcke in einer im Wesentlichen liegenden Position in die Fächer einführbar sind und/oder die Auslageeinheit derart ausgestaltet ist, dass die Buchblöcke in einer im Wesentlichen liegenden Position aus den Fächern ausführbar sind. Vorteilhafterweise haben die Buchblöcke in der im Wesentlichen liegenden Position, in der sie auf einer der Flachseiten liegen, einen vorauseilenden Buchrücken, sowohl im Bereich der Anlegeeinheit als auch im Bereich der Auslageeinheit.

In einer weiteren vorteilhaften Ausgestaltung der erfindungsgemäßen Kühlvorrichtung umfasst die Auslageeinheit ein Förderband für Buchblöcke, das mit einer größeren Geschwindigkeit betreibbar ist als die Kette betrieben wird. Diese größere Geschwindigkeit des Förderbandes der Auslageeinheit trägt dem größeren Platzbedarf der einzelnen Buchblöcke Rechnung, wenn diese nach der Transporteinheit wieder liegend horizontal hintereinander transportiert werden. Gleichzeitig führt es dazu, dass die Buchblöcke in den Fächern, die dort leicht nach hinten geneigt angeordnet sind, mit dem Buchrücken voran aus den Fächern heraustransportiert werden, und damit ihre ursprüngliche Ausrichtung, die sie vor Eintritt in die Transportvorrichtung bzw. die Kühlvorrichtung hatten, wieder erlangen.

In einer weiteren vorteilhaften Ausgestaltung der erfindungsgemäßen Kühlvorrichtung ist die Kühlvorrichtung um eine beliebige Anzahl von Transportvorrichtungen gemäß Anspruch 1 verlängerbar. Dies hat zum einen den Vorteil, dass die Abkühlzeit bei gleicher Maschinengeschwindigkeit bis zu einem gewissen Grad einstellbar ist, zum anderen kann durch den Platz sparenden Transport der Buchblöcke die Transportvorrichtung auch als Pufferstrecke zwischen unterschiedlichen Einheiten etwa bei Auftragswechsel oder dergleichen verwendet werden. Dadurch kann etwa ein dahinter angeordneter Dreischneider mit geringerer Geschwindigkeit aber kontinuierlicher Geschwindigkeit betrieben werden.

Die Erfindung betrifft auch eine Kühlvorrichtung für Buchblöcke entlang eines Transportpfades mit im Wesentlichen vertikalen Fächern zur Aufnahme der Buchblöcke, wobei die Fächer an einer umlaufenden Kette angeordnet sind, wobei Kühlmittel entlang des Transportpfades vorgesehen sind, wobei die Kühlvorrichtung im Auslagebereich eine Rampe aufweist, die die Höhe zwischen der Transportstrecke und einer nachfolgenden Bearbeitungseinheit überbrückt. Vorteilhaft daran ist, dass dadurch eine weitere möglicherweise platzaufwendige Hebevorrichtung für die Buchblöcke entfällt.

In einer vorteilhaften Ausgestaltung der erfindungsgemäßen Kühlvorrichtung sind Mittel vorgesehen, die verhindern, dass die Fächer beim Transport entlang der Rampe aus der im Wesentlichen vertikalen Ausrichtung gedreht werden und also in dieser im Wesentlichen vertikalen Ausrichtung verbleiben. Dadurch erreichen die Buchblöcke in den im Wesentlichen vertikalen Fächern die Bearbeitungsebene einer Nachfolgeeinheit, ohne während des gesamten Transportes in ihrer räumlichen Ausrichtung verändert worden zu sein. Bei den Mitteln handelt es sich vorteilhafterweise um Laufrollen, die an den Fächern angebracht sind, wobei die Laufrollen entlang der Rampe auf Laufschienen aufwärts rollen. Diese dienen als Stütze für die ansonsten beweglich an der Kette befestigten Fächer.

In einer weiteren vorteilhaften Ausführungsform tauchen die Fächer im Auslagebereich der Kühlvorrichtung durch eine Transportebene eines nachgeordneten Förderbandes ab. Dabei ist vorteilhafterweise das nachgeordnete Förderband im Wesentlichen horizontal angeordnet. Das hat den Vorteil, dass einer nachfolgenden Bearbeitungsstation, etwa einem Dreischneider, die Buchblöcke ebenfalls im Wesentlichen in einer horizontalen Ausrichtung zugeführt werden. Diese Ausrichtung entspricht der typischen Ausrichtung im Anlegerbereich von derartigen Vorrichtungen. Das Förderband wird vorteilhafterweise mit einer höheren Geschwindigkeit als die im Wesentlichen vertikal angeordneten Transportfächer in Transportrichtung betrieben. Da die Transportfächer gegen die Transportrichtung leicht nach hinten geneigt angeordnet sind, wird durch das schneller laufende Förderband der unten in den Transportfächern liegende Buchrücken der Buchblöcke zuerst abtransportiert, so dass der Buchrücken dem Buchblock vorauseilt. Vorteilhafterweise sind in dem Auslagebereich der Kühlvorrichtung seitlich der Fächer Rückhaltemittel, insbesondere Bürsten, angeordnet, die die Buchblöcke gegen die Transportrichtung kippen, so dass die Ausförderbewegung des Förderbandes unterstützt wird und sichergestellt ist, dass die Buchblöcke mit dem Buchrücken voran abtransportiert werden.

Bevorzugte Ausführungsformen der erfindungsgemäßen Transportvorrichtung werden im Folgenden unter Bezugnahme auf die Zeichnungen im Einzelnen näher beschrieben. Es zeigen in schematischer Darstellung:
- Fig. 1: Eine Seitenansicht einer Ausführungsform der erfindungsgemäßen Vorrichtung
- Fig. 2: Eine Draufsicht auf eine Ausführungsform der erfindungsgemäßen Transportvorrichtung
- Fig. 3: Eine Seitenansicht einer Ausführungsform einer erfindungsgemäßen Kühlvorrichtung und
- Fig. 4: Eine isometrische Ansicht einer Ausführungsform der erfindungsgemäßen Kühlvorrichtung mit zwei erfindungsgemäßen Transportvorrichtungen.
- Fig. 5: Eine perspektivische Ansicht einer Ausführungsform einer erfindungsgemäßen Kühlvorrichtung
- Fig. 6: Eine Seitenansicht einer Ausführungsform einer erfindungsgemäßen Kühlvorrichtung

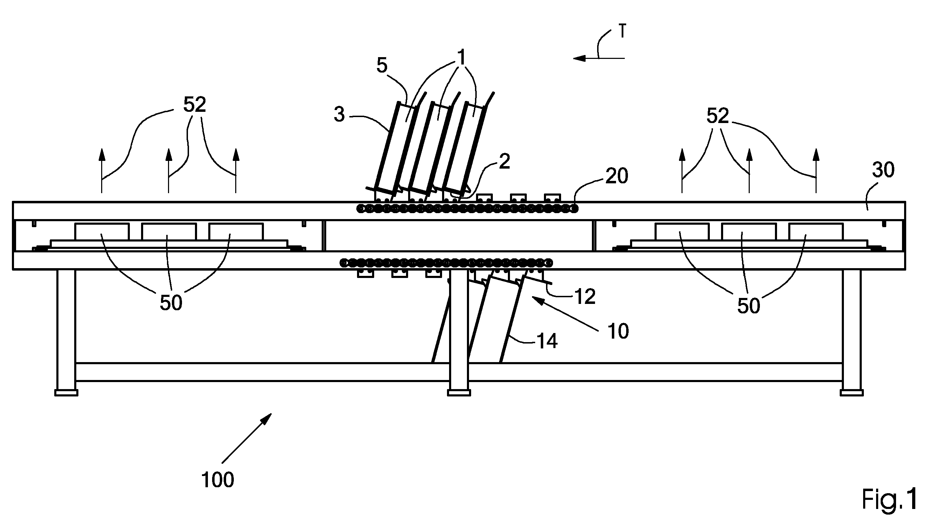

Wie in Fig. 1 zu sehen ist, ist innerhalb eines Gestells 30 der Transportvorrichtung 100 eine umlaufende Kette 20 angeordnet. Zur Vereinfachung ist jeweils nur ein Kettenabschnitt 20 gezeigt, aber sowohl Kette 20 als auch die befestigten Fächer 10 erstrecken sich über die ganze Länge der Transportvorrichtung 100 sowohl auf der Oberseite der Transportvorrichtung 100 für den Transport von Buchblöcken 1 in die mit dem Bezugszeichen T gekennzeichnete Transportrichtung, als auch für leere Fächer 10 auf der Unterseite der Transportvorrichtung 100 für den Rücktransport der Fächer 10 entgegengesetzt der Transportrichtung T.

Die Transportfächer 10 sind in gleichmäßigen Abständen zueinander an der Kette 20 befestigt. Die Fächer 10 weisen einen Fachboden 12 sowie eine Seitenwand 14 auf.

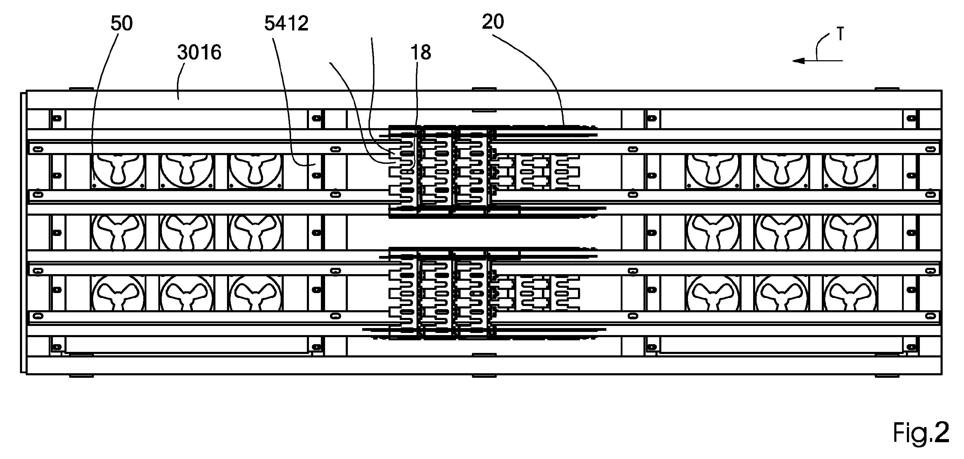

In Fig. 1 sind Buchblöcke 1, die in den leicht geneigten Fächern liegen, gezeichnet. Diese Buchblöcke 1 weisen einen Buchrücken 2, Flachseiten 3, bei denen es sich um die Umschlagseiten des Buchblocks handelt, sowie eine Vorderseite 5 auf, die dem Buchrücken entgegengesetzt ist. Wie in Fig. 2 zu sehen ist, weist der Fachboden 12 einerseits eine kammartige Struktur mit Aussparungen 16 auf als auch zusätzlich Öffnungen 18.

Zwischen dem Kettenteil 20, der sich in Transportrichtung T bewegt, und dem Kettenteil 20 sich auf dem Rückweg entgegen der Transportrichtung T befindet, sind Ventilatoren 50 angebracht, die eine Luftströmung 52 erzeugen, die im Wesentlichen gegen die Buchrücken 2 in den Fächern 10 gerichtet ist. Die Öffnungen 18 bzw. Aussparungen 16 des Fachbodens erlauben einen direkten Kontakt zwischen dem Luftstrom 52 und dem Buchrücken 2, der durch diesen Luftstrom 52 gekühlt wird. Ziel der Kühlung ist es, ein klebegebundenen Buchbock 1 soweit abzukühlen, nachdem der Leim auf dem Buchrücken 2 aufgetragen wurde, dass eine nachfolgende dreiseitige Beschneidung des Buchblocks 1 ohne Beschädigung des Buchbocks 1 oder der Verklebung am Buchrücken 2 erfolgen kann.

Wie in Fig. 2 zu erkennen ist, befinden sich eine Mehrzahl von Ventilatoren, hier drei, als Gruppe auf einer Ventilatorenplatte 54, die an dem Gehäuse der Transportvorrichtung 100 befestigbar ist. Die Ventilatoren 50 können so einzeln auf den Ventilatorenplatte 54 außerhalb des Gehäuses 30 montiert werden und im Anschluss gruppenweise mit der Ventilatorplatte 54 in das Gehäuse 30 eingesetzt werden. Wie in Fig. 2 zu sehen ist, sind mehrere dieser Ventilatorenplatte 54 über die Breite der Vorrichtung 100 verteilt sowie über deren Länge. Je nach Format der Buchblöcke 1, die insbesondere mittig zur Transportvorrichtung 100 in Transportrichtung T transportiert werden, werden die Ventilatoren 50 oder Ventilatorengruppen auf einer Ventilatorenplatte 54 betrieben. Bei kleinformatigen Buchblöcken 1 ist es also nur erforderlich, die mittleren Ventilatoren 50 zu betreiben. Auf diese Art und Weise kann der Leistungsbedarf der Transportvorrichtung 100 vorteilhafterweise reduziert werden. Es ist aber auch denkbar, alle Ventilatoren 50 gleich zu betreiben.

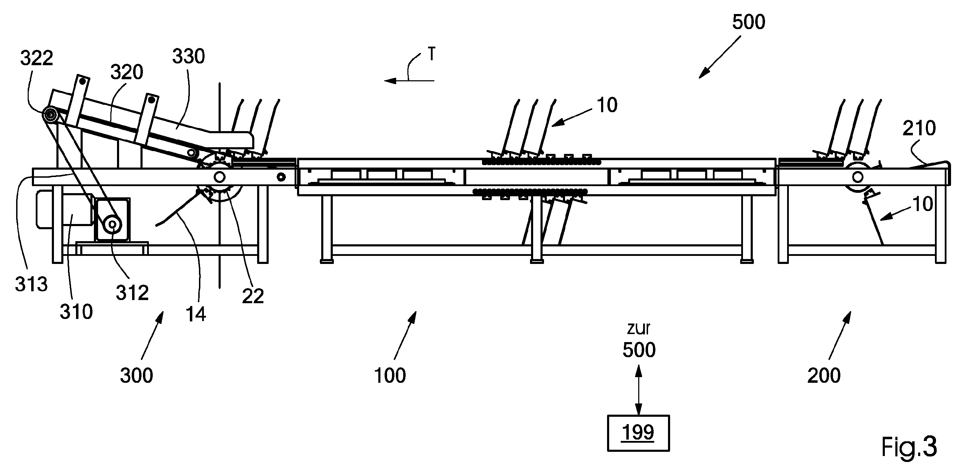

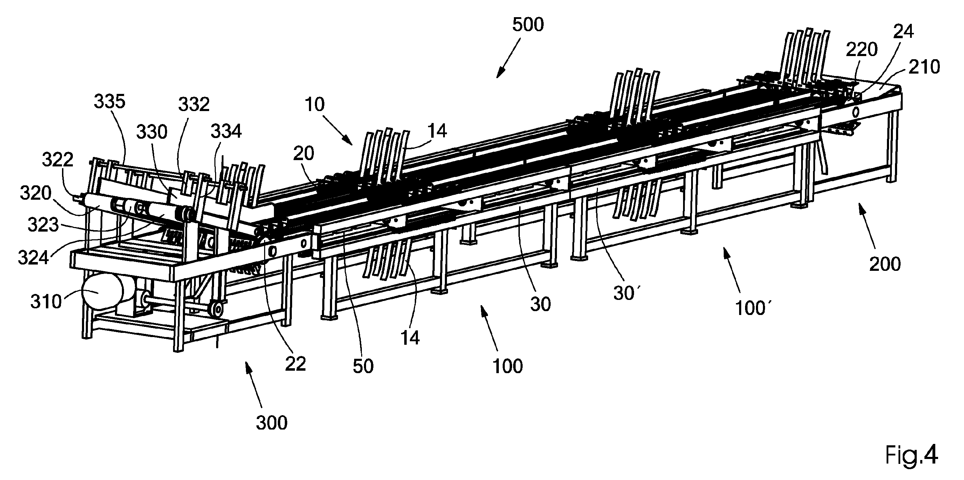

In einer Ausführungsform ist die Kette 20 innerhalb der Transportvorrichtung 100 geschlossen, die Transportvorrichtung 100 weist dann entsprechende, nicht gezeigte Umlenkrollen am jeweiligen Ende der Transportvorrichtung 100 auf, die von der Kette 20 umschlungen werden. Eine andere Ausführungsform, bei der sich die Kette zusätzlich über andere Teile einer Kühlvorrichtung 500 erstreckt, ist in Fig. 3 gezeigt. In Fig. 4 erstreckt sich dieselbe Kette gleich über mehrere der Transportvorrichtungen 100, 100'. Die Kette 20 weist dazu dem Fachmann bekannte, nicht gezeigte Segmente auf, mittels der die Kette 20 einfach geöffnet, verlängert und wieder geschlossen werden kann.

In Fig. 4 ist eine Kühlvorrichtung 500 dargestellt. Diese setzt sich aus einer Transportvorrichtung 100, 100' wie in Fig. 1 und 2 beschrieben, sowie einer Anlegeeinheit 200 und einer Auslageeinheit 300 zusammen. Die Anlegeeinheit 200 weist eine vordere Umlenkrolle 24 für die Kette auf und eine Anlegeschräge 210. Die Anlegeschräge 210 weist Durchtrittsöffnungen 220 für die Seitenwände 14 der Fächer 10 auf, wie in Fig. 4 zu erkennen ist. Die Einlegeschräge 210 weist einen Winkel zur Horizontalen auf, der im Wesentlichen dem Neigungswinkel der Seitenwände 14 der Fächer 10 zur Vertikalen entspricht, so dass die Seitenwand 14 mit der Einlegeschräge 210 fluchten kann. Allerdings ist dies nicht zwingend erforderlich.

Ein nicht gezeigtes Förderband einer vorangegangenen Vorrichtung transportiert einen Buchblock 1 mit dem Buchrücken 2 voran zur Einlegeschräge 210, die der Buchblock 1 entweder heruntergleitet oder von dem nicht gezeigten Förderband geschoben wird. Je nach Betriebsart der Kette 20, also getaktet oder kontinuierlich befindet sich bei der Zufuhr eines weiteren Buchblocks 1 ein Fach 10 gerade in einer im Wesentlichen horizontalen Ausrichtung, so dass der Buchblock 1 problemlos auf die Einlegeschräge 210 geschoben werden kann. Bei kontinuierlichem Betrieb ist bei der Zufuhr des vorhandenen Buchblocks 1 das vorangegangene Fach 10 wenigstens soweit entfernt, dass es den Buchblock 1 auf der Einlegeschräge 210 nicht behindert und das nachfolgende Fach 10 den auf der Einlegeschräge 210 liegenden Buchblock 1 mitnimmt. Wie in den Figuren 1 bis 4 zu sehen ist, ist die Seitenwand 14 am oberen Bereich noch etwas weiter nach hinten geneigt. Dies unterstützt die leichtere Zufuhr eines Buchblocks entlang der Einlegeschräge 210 in ein bereitstehendes Fach 10.

Am anderen Ende der Kühlvorrichtung 500 befindet sich eine Auslageeinheit 300, die auch den Antrieb 310 der gesamten Kühlvorrichtung 500 trägt. Der unterhalb der Transportebene angebrachte Antrieb 310 treibt über eine Antriebswelle 312 und einen Antriebsriemen 313 eine Welle 322 an, sowie die hintere Umlenkrolle 22 der Kette 20. Um die Welle 322 sind Förderbänder 320, 323, 324 angeordnet. Zwischen diesen Förderbändern 320, 323, 324 ist jeweils ein Spalt vorgesehen, so dass die schmalen Seitenwände 14 (siehe Fig. 4), durch die Ebene der Förderbänder 320, 323, 324 abtauchen können, um den Rückweg der Fächer 10 zur Anlageeinheit 200 zu erlauben.

Die Förderbänder 320, 323, 324 werden mit einer höheren Laufgeschwindigkeit als die Laufgeschwindigkeit der Kette 20 betrieben. Erreicht ein Buchblock 1 in einem Fach 10 nun diese leicht nach oben geneigten schnelleren Transportbänder 320, 323, 324, so kommen diese in Kontakt mit dem Buchrücken 2, ziehen diesen von dem Fachboden 12 ab und beschleunigen den Buchblock 1 weiter in Transportrichtung T, so dass der Buchblock 1 mit dem Buchrücken 2 voran soweit die Förderbänder 320, 323, 324 entlang gefördert wurde, so dass die zwischen den Förderbändern 320, 323, 324 abtauchenden Seitenwände 14 nicht mehr in Kontakt mit dem Buchblock 1 treten können. Dadurch hat der Buchblock 1 nach Verlassen der Kühlvorrichtung 500 die gleiche Ausrichtung wie bei der Zufuhr zur Kühlvorrichtung 500.

Wie besonders gut in Fig. 4 zu erkennen ist, ist die Seitenwand 14 der Fächer 10 zweigeteilt und besteht im Wesentlichen aus zwei schmalen parallelen, leicht nach hinten geneigten Stegen. Diese Stege haben zueinander einen Abstand, der mindestens dem kleinsten Format eines Buchblocks 1 entspricht, der mit dieser Vorrichtung 100, 500 transportiert werden soll. Dazu werden die Buchblöcke 1 mittig zu der Transportvorrichtung 100 transportiert, die Mittellinie der Buchblöcke in Transportrichtung T entspricht also im Wesentlichen der Mittellinie der Transportvorrichtung 100, 100'.

Wie in Fig. 4 zu sehen ist, sind neben dem Transportpfad in der Auslageeinheit 300 Seitenbegrenzungen 330 für die Buchblöcke 1 angeordnet. Diese Seitenbegrenzungen 330 sind über Halterungen 332 an Querstangen 335 beweglich gelagert. Die Querstangen 335 sind in gerätefesten Streben 334 gelagert. Obwohl die Seitenbegrenzungen 330 des Transportpfades nur für die Auslageeinheit 300 gezeigt sind, ist klar, dass auch die Transportvorrichtungen 100, 100' derartige Seitenbegrenzungen aufweisen können, die den Transport der Buchblöcke 1 entlang der Transportrichtung T sichern.

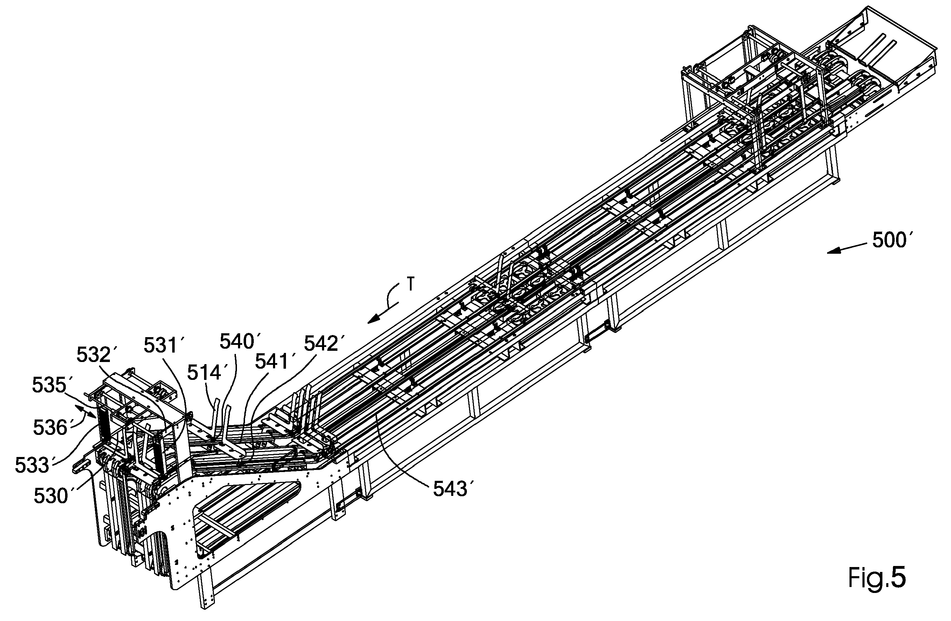

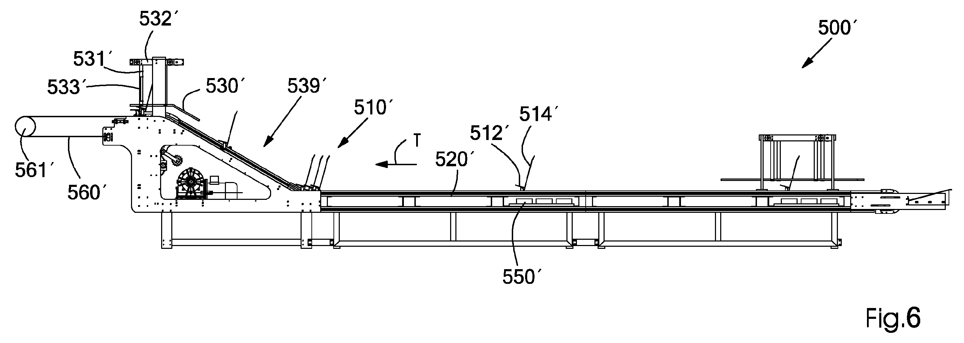

In den Figuren 5 und 6 ist eine weitere Ausführungsform 500' der erfindungsgemäßen Kühlvorrichtung 500, 500' gezeigt. Die Kühlvorrichtung 500' kann der Vorrichtung zum Überführen von Buchblöcken nachgeordnet sein. In diesem Fall transportiert das zweite Transportband 70 den Buchblock 1 mit dem Buchrücken 2 voran zu einer Einlegeschräge, an der der Buchblock 1 in ein Fach 510' eingelegt wird. Das Fach 510' weist einen Fachboden 512' und eine Seitenwand 514' auf. Die Seitenwand 514' und der Fachboden 512' sind leicht gegen die Transportrichtung T geneigt, so dass der Buchblock 1 kippsicher in dem Fach 510' entlang der Transportrichtung T transportiert werden kann. Der Buchrücken 2 ruht dabei auf dem Fachboden 512' und eine Flachseite 3 des Buchblock 1 auf einer Seitenwand 514' des Fachs 510'. Unterhalb der Transportstrecke der Kühlvorrichtung 500' sind Kühlelemente 550', insbesondere Ventilatoren 550' angeordnet, die einen Luftstrom gegen den Buchrücken 2 der Buchblöcke 1 lenken. Dadurch wird in Platz sparender Art und Weise der Buchrücken 2 des frisch klebegebundenen Buchblocks 1 soweit gekühlt, dass eine nachfolgende Dreischneidereinheit den Buchblock 1 auf drei Seiten beschneiden kann, ohne dass dabei die Qualität der Bindung leidet.

Nach dem Überqueren der Kühlstrecke der Kühlvorrichtung 500', an der diese Ventilatoren 550' angeordnet sind, gelangen die Fächer 510' auf eine Rampe 539', an der sie schräg nach oben transportiert werden. Die Fächer 510' sind an einer Kette 520' befestigt, die angetrieben ist. Unterhalb der Kette 520' sind Laufschienen 551', 553' angeordnet. Die Fächer 510' weisen Laufrollen 540', 542' auf. In dem Bereich der Kühlstrecke der Kühlvorrichtung 500' stützen sich die Fächer 510' mit einer Laufrolle 542' gegen eine Laufschiene 543' ab, derart, dass sich die im Wesentlichen vertikale, leicht gegen die Transportrichtung geneigte Ausrichtung der Fächer 510' ergibt. Im Bereich der Rampe 539' gelangen nun die Laufrollen 540' in Kontakt mit den Laufschienen 541', die parallel zu der Rampe 539' angeordnet sind, und stützen nunmehr die Fächer 510' derart, dass die gleiche vertikale Ausrichtung der Fächer 510' wie in dem Bereich der Kühlstrecke der Kühlvorrichtung 500' beibehalten wird.

Im oberen Bereich der Rampe 539' sind Leitelemente 530' für das seitliche Ausrichten der Buchblöcke 1 in den Fächern 510' vorgesehen, die die Buchblöcke 1 wieder mittig zur Transportrichtung ausrichten. Gleiche Leitelemente sind auch im Eingangsbereich der Kühlvorrichtung 500' angebracht. Die Leitelemente 530' sind an einer Halterung 531' angebracht, die über eine Querverbindung 532' in einer Stange 535' gelagert sind und auf dieser entlang der Bewegungsrichtung 536' seitlich verschoben werden können, in Abhängigkeit der Abmessungen des Buchblocks 1. An den vertikalen Halterungen 531' sind Bürsten 533' angebracht, derart, dass ein Buchblock 1, der in einem Fach 510' dem Ende der Transportstrecke der Kühlvorrichtung 500' liegt, solange in der etwas gegen die Transportvorrichtung geneigten Position schiebt, dass nachfolgende Transportbänder 560', die um Umlenkrollen 561' angetrieben werden, abtransportiert werden können. Auch hier ist das nachfolgende Transportband 560' mit einer im Vergleich zur Geschwindigkeit der Kette 520' größeren Geschwindigkeit betrieben, so dass die Buchblöcke 1 mit dem Buchrücken 2 voran aus den Fächern 510' ausgefördert werden können.

Die erfindungsgemäße Transportvorrichtung 100 bzw. Kühlvorrichtung 500, 500' wurde in Kombination mit klebegebundenen Buchblöcken 1 beschrieben. Es ist aber auch denkbar, andere flache Gegenstände, die einer Kühlung bedürfen, mit einer entsprechenden Vorrichtung zu transportieren. Auch eine negative Kühlung, also eine Erwärmung von flachen Gegenständen kann durch das Ersetzen der Kühlmittel 50 durch geeignete Erwärmungsmittel oder durch Verwendung eines erwärmten Luftstroms, der durch die Ventilatoren 50 bewegt wird, in anderen Anwendungen denkbar sein.

### Liste der Bezugszeichen

- 1: Buchblock
- 2: Buchrücken
- 3: Flachseite des Buchblocks
- 5: Vorderseite des Buchblocks
- 10: Fach
- 12: Fachboden
- 14: Seitenwand
- 16: Aussparung
- 18: Öffnung
- 20: Kette
- 22: hintere Umlenkrolle
- 24: vordere Umlenkrolle
- 30, 30': Gestell
- 50: Ventilator
- 52: Luftstrom
- 54: Ventilatorplatte
- 100, 100': Transportvorrichtung
- 200: Anlageeinheit
- 210: Einlegeschräge
- 220: Durchtrittsöffnung
- 300: Auslageeinheit
- 310: Antrieb
- 312: Antriebswelle
- 313: Antriebsriemen
- 320: Förderband
- 322: Welle
- 323: Förderband
- 324: Förderband
- 330: Seitenbegrenzung
- 332: Halterung
- 334: Strebe
- 335: Stange
- 500: Kühlvorrichtung
- 500': Kühlvorrichtung
- 510': Fach
- 512': Fachboden
- 514': Seitenwand
- 530': Seitenleitelement
- 531': Halterung
- 532': Querverbindung
- 533': Bürste
- 535': Stange
- 536': Bewegungsrichtung
- 539': Rampe
- 540': Laufrolle
- 541': Laufschiene
- 542': Laufrolle
- 543': Laufschiene
- 560': Transportband
- 561': Umlenkrolle

- T: Transportrichtung

## Patentansprüche

1. Transportvorrichtung für Buchblöcke (1) entlang eines Transportpfads (T) mit im Wesentlichen vertikalen Fächern (10) zur Aufnahme der Buchblöcke (1), wobei die Fächer (10) an einer umlaufenden Kette (20) angeordnet sind, wobei Kühlmittel (50) entlang des Transportpfades (T) vorgesehen sind.

2. Transportvorrichtung nach dem Anspruch 1,
**dadurch gekennzeichnet,**
**dass** die Fächer (10) in Transportrichtung (T) leicht nach hinten geneigt sind.

3. Transportvorrichtung nach dem Anspruch 1,
**dadurch gekennzeichnet,**
**dass** die Fächer (10) eine Seitenwand (14) und einen Fachboden (12) aufweisen, wobei ein Buchblock (1) im Fach (10) mit dem Buchrücken (2) auf dem Fachboden (12) aufliegt und mit einer Flachseite (3) an der Seitenwand (14) anliegt.

4. Transportvorrichtung nach dem Anspruch 3,
**dadurch gekennzeichnet,**
**dass** der Fachboden (12) Öffnung (18) und / oder eine kammartige Struktur (16) aufweist.

5. Transportvorrichtung nach dem Anspruch 1,
**dadurch gekennzeichnet,**
**dass** es sich bei den Kühlmitteln (50) um Ventilatoren (50) handelt.

6. Transportvorrichtung nach dem Anspruch 5,
**dadurch gekennzeichnet,**
**dass** die Ventilatoren (50) derart eingebaut sind, dass sie einen Luftstrom (52) erzeugen, der gegen den Buchrücken (2) gerichtet ist.

7. Kühlvorrichtung für Buchblöcke (1) mit wenigstens einer Transportvorrichtung (100, 100') nach Anspruch 1,
**dadurch gekennzeichnet,**
**dass** die Kühlvorrichtung (500) eine zusätzliches Anlageeinheit (200) aufweist, mit der die Buchblöcke (1) in die Fächer (10) einführbar sind sowie eine zusätzliche Auslageeinheit (300) aufweist, mit der die Buchblöcke (1) aus den Fächern (10) ausführbar sind.

8. Kühlvorrichtung nach dem Anspruch 7,
**dadurch gekennzeichnet,**
**dass** die Anlageeinheit (200) derart ausgestaltet ist, dass die Buchblöcke (1) in einer im Wesentlichen liegenden Position in die Fächer (10) einführbar sind und / oder die Auslageeinheit (300) derart ausgestaltet ist, dass die Buchblöcke (1) in einer im Wesentlichen liegenden Position aus den Fächern (10) ausführbar sind.

9. Kühlvorrichtung nach dem Anspruch 7,
**dadurch gekennzeichnet,**
**dass** die Auslageeinheit (300) ein Förderband (320, 323, 324) für Buchblöcke (1) umfasst, das mit einer größeren Geschwindigkeit betreibbar ist als die Kette (20) betrieben wird.

10. Kühlvorrichtung nach dem Anspruch 7,
**dadurch gekennzeichnet,**
**dass** die Kühlvorrichtung (500) um eine beliebige Anzahl von Transportvorrichtung (100, 100') gemäß Anspruch 1 verlängerbar ist.

11. Kühlvorrichtung nach dem Anspruch 7
**dadurch gekennzeichnet,**
**dass** die Kühlvorrichtung (500') im Auslagebereich eine Rampe (539') aufweist, die die Höhe zwischen der Transportstrecke und einer nachfolgenden Bearbeitungseinheit überbrückt.

12. Kühlvorrichtung (500') nach Anspruch 11,
**dadurch gekennzeichnet,**
**dass** Mittel (540', 541', 542', 543') vorgesehen sind, die verhindern, dass die Fächer (510') beim Transport entlang der Rampe (539') aus der im Wesentlichen vertikalen Ausrichtung gedreht werden.

13. Kühlvorrichtung (500') nach Anspruch 11,
**dadurch gekennzeichnet,**
**dass** es sich bei diesen Mitteln (540', 541', 542', 543') um Laufrollen (540', 542') handelt, die an den Fächern (510') angebracht sind, wobei die Laufrollen (540', 542') entlang der Rampe (539') auf Laufschienen (541', 543') aufwärts rollen.

14. Kühlvorrichtung (500') nach Anspruch 11,
**dadurch gekennzeichnet,**
**dass** im Auslagebereich der Kühlvorrichtung (500') die Fächer (510') durch eine Transportebene eines nachgeordneten Förderbands (560') abtauchen.

15. Kühlvorrichtung (500') nach Anspruch 14,
**dadurch gekennzeichnet,**
**dass** in diesem Auslagebereich seitlich der Fächer (510') Rückhaltemittel (533'), insbesondere Bürsten (533'), angeordnet sind, die die Buchblöcke (1) gegen die Transportrichtung kippen, so dass die Buchblöcke (1) durch das Förderband (560') mit dem Buchrücken (2) voran abtransportiert werden.
